# EUROPEAN PATENT SPECIFICATION

(11) **EP 2 415 705 B1**
(45) Date of publication and mention of the grant of the patent: **25.06.2014**
(21) Application number: 09843050.7
(22) Date of filing: 23.06.2009
(51) Int. Cl.: B67D 3/00

(54) **BEVERAGE DISPENSER**
GETRÄNKESPENDER
DISTRIBUTEUR DE BOISSON

(30) Priority: 30.03.2009 JP 2009081655
(43) Date of publication of application: 08.02.2012
(73) Proprietor: Kabushiki Kaisha Cosmo Life, Kakogawa-shi Hyogo 675-0032 (JP)
(72) Inventor: SHIOTANI Nana, Fukuchiyama-shi Kyoto 620-0926 (JP); SHIOTANI Masaru, Fukuchiyama-shi Kyoto 620-0926 (JP)
(74) Representative: Grünecker, Kinkeldey, Stockmair & Schwanhäusser
(86) International application number: PCT/JP2009/061386
(87) International publication number: WO 2010/116544

(56) References cited:
- JP-A- 2003 128 194
- JP-A- 2006 341 915
- JP-A- 2007 240 117
- JP-A- 2009 035 322
- JP-U- 1 134 098
- US-A- 3 843 021
- US-A- 5 273 083
- US-A1- 2004 178 229

## Description

### TECHNICAL FIELD

The present invention relates to a beverage dispenser for dispensing drinking water transferred from a raw water container into a tank through an outlet valve.

### BACKGROUND ART

There is known a beverage dispenser comprising a raw water container for holding drinking water therein, a container connecting portion to which the outlet port of the raw water container can be connected with the outlet port facing downward, a tank provided under the connecting portion for holding drinking water dropped from the raw water container, and an outlet valve through which drinking water in the tank can be dispensed. In some of such beverage dispensers, a raw water container is used which is made of a soft material so that its side wall has flexibility (see e.g. Patent document 1).

Such a raw water container can be collapsed during transportation, so that it can be transported efficiently. During use, as drinking water in the container drops, the container is gradually collapsed under atmospheric pressure. This prevents entry of air into the container as well as foreign matter in the air such as microorganisms and thus prevents contamination of water with e.g. microorganisms.

### PRIOR ART DOCUMENTS

### PATENT DOCUMENTS

Patent document 1: JP Patent Publication 2006-131277A according to the preamble of claim 1.

### SUMMARY OF THE INVENTION

### OBJECT OF THE INVENTION

If a soft raw water container as described is used in a beverage dispenser, as the drinking water in the container runs low, the rigidity of the collapsed side wall will eventually increases to such an extent that the side wall cannot be collapsed any further. This generates a negative pressure in the container, making it impossible to drop the remaining drinking water in the container into the tank. Thus, it is impossible to use up drinking water in the container, at least not automatically.

In order to transfer such water remaining in the container into the tank, it is necessary to lift the raw water container until its outlet port separates from the container connecting portion, and incline the container to admit air into the container, thereby eliminating the negative pressure in the container, has to be the drinking water But since the raw water container is located at a high level, it is difficult to lift the container in a stable manner. Also, drinking water may spill around the container connecting portion.

An object of the present invention is to provide a beverage dispenser including a soft raw water container which makes it possible to spontaneously use up drinking water in the container.

### MEANS TO ACHIEVE THE OBJECT

In order to achieve this object, the present invention provides a beverage dispenser comprising a raw water container for holding drinking water therein, the container having an outlet port, a container connecting portion to which the outlet port of the raw water container can be connected with the outlet port facing downward, a tank provided under the connecting portion for holding drinking water dropped from the raw water container, an outlet valve through which drinking water in the tank can be dispensed, a water passage tube provided at the container connecting portion and inserted upwardly into the outlet port of the raw water container, the water passage tube being formed with a water passage hole through which drinking water in the raw water container passes and which has a first opening at a bottom end portion thereof, a water passage pipe which is connected the first opening and through which drinking water drops into the tank, and a first on-off valve provided at a free end of the water passage pipe and configured to open when the water level in the tank lowers, wherein the raw water container has a side wall which is sufficiently flexible such that as drinking water in the container drops, the container is gradually collapsed under atmospheric pressure, wherein the interior of the water passage tube has a cross-section which is partitioned into a water passage through which the water passage hole communicates with the first opening, and an air passage communicating with a small air passage hole which opens to the water passage or the interior of the outlet port and having a second opening at a lower end portion of the air passage, and wherein the beverage dispenser further comprises an air passage pipe connected to the second opening and hanging into the tank, and a second on-off valve provided at a free end of the air passage pipe and configured to open when the water level in the tank lowers.

With the arrangement wherein the interior of the water passage tube has a cross-section which is partitioned into a water passage through which the water passage hole communicates with the first opening, and an air passage communicating with a small air passage hole which opens to the water passage or the interior of the outlet port and having a second opening at a lower end portion of the air passage, and wherein the beverage dispenser further comprises an air passage pipe connected to the second opening and hanging into the tank, and a second on-off valve provided at a free end of the air passage pipe and configured to open when the water level in the tank lowers, when drinking water in the container runs low and stops dropping and as a result, the water level in the tank remains low, air in the tank is introduced into the container through the second on-off valve, which is now open, the air passage pipe, the air passage, and the small air passage hole. This eliminates the negative pressure in the container, thus allowing driving water remaining in the container to be completely dropped into the tank. Thus, it is possible to automatically and spontaneously use up drinking water in the container. Since air introduced into the container from the tank is cleaner than outer air, the interior of the container is less likely to be contaminated.

It is not clearly known why air in the tank flows into the air passage through the air passage pipe when drinking water in the container runs low and stops dropping into the tank and as a result, the water level in the tank remains low. But this is presumably because while drinking water in the container runs low and stops dropping and the pressure of the water in the container is substantially equal to the atmospheric pressure, the pressure in the air passage, which communicates with the interior of the container through the small air passage hole, tends to fluctuate, producing a difference between the pressure in container and the pressure in the air passage, and due to this pressure difference, i.e. a slight difference between the pressure in the air passage and the atmospheric pressure, drinking water in the water passage drops and thus air in the tank flows into the air passage through the air passage pipe. Air introduced into the air passage then flows into the container and rises through the water in the container in the form of air bubbles, thus eliminating the negative pressure in the container. When the water level in the tank decreases and the on-off valve of the air passage pipe opens while enough drinking water is stored in the container, the air passage is always completely filled with water and the amount of water that drops from the air passage pipe is always identical to the amount of water supplied into the air passage through the small air passage hole. Thus, no air is admitted into the air passage. The on-off valve of the air passage pipe is necessary because without this valve, even while there is enough water in the tank, drinking water would drop little by little into the tank from the water passage pipe.

The small air passage hole should have an area which is one-fifth or less, preferably one-tenth or less, of the cross-sectional area of the air passage.

The small air passage hole should have a diameter of 3 mm or less, preferably 1.5 mm or less.

The air passage pipe is preferably a straight pipe extending vertically from the second opening into the tank so that air introduced into the air passage pipe can smoothly flow into the air passage.

To minimize the number of parts, the first and second on-off valves are preferably opened and closed by a single common float floating on the water in the tank.

### ADVANTAGES OF THE INVENTION

With the beverage dispenser according to the present invention, because the interior of the water passage tube has a cross-section which is partitioned into a water passage through which the water passage hole communicates with the first opening, and an air passage communicating with a small air passage hole which opens to the water passage or the interior of the outlet port and having a second opening at a lower end portion of the air passage, and the beverage dispenser further comprises an air passage pipe connected to the second opening and hanging into the tank, and a second on-off valve provided at a free end of the air passage pipe and configured to open when the water level in the tank lowers, when drinking water in the container runs low and stops dropping and as a result, the water level in the tank remains low, air in the tank is introduced into the container through the second on-off valve, which is now open, the air passage pipe, the air passage, and the small air passage hole. This eliminates the negative pressure in the container, thus allowing driving water remaining in the container to be completely dropped into the tank. Thus, it is possible to automatically and spontaneously use up drinking water in the container. Since air introduced into the container from the tank is cleaner than outer air, the interior of the container is less likely to be contaminated.

### BRIEF DESCRIPTION OF THE DRAWINGS

Fig. 1 is a vertical sectional view of a beverage dispenser according to a first embodiment.
Fig. 2 is an enlarged vertical sectional view of an upper portion of Fig. 1.
Fig. 3(a) is a vertical sectional view of a container connecting portion of Fig. 2; and Fig. 3(b) is a sectional view taken along line III-III of Fig. 3(a).
Fig. 4 is an enlarged vertical sectional view of an upper portion of a beverage dispenser according to a second embodiment.
Fig. 5(a) is a vertical sectional view of a container connecting portion of Fig. 4; and Fig. 5(b) is a sectional view taken along line V-V of Fig. 5(a).
Fig. 6 is a vertical sectional view of a modification of Fig. 4.

### BEST MODE FOR EMBODYING THE INVENTION

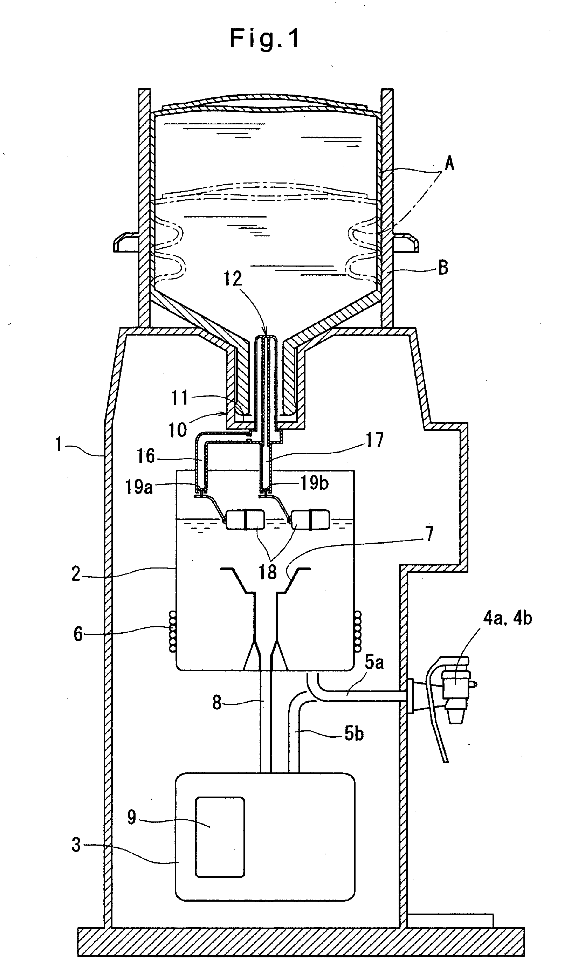

Now embodiments of the present invention are described with reference to the drawings. Figs. 1 to 3 show the beverage dispenser of the first embodiment, which includes, as shown in Fig. 1, a container connecting portion 10 to which an outlet port of a raw water container A, which is filled with drinking water, is connected with the container A positioned such that its outlet port faces down. The container A is made of a soft material so that its side wall has flexibility. Under the container connecting portion 10, the beverage dispenser includes a low-temperature tank 2 and a high-temperature tank 3. The dispenser further includes a casing 1 and a cold water outlet valve 4a and a hot water outlet valve 4b provided at the front wall of the casing 1 and connected to the bottom of the low-temperature tank 2 and the ceiling of the high-temperature tank 3 through outlet pipes 5a and 5b, respectively. The raw water container A, which is made of a soft material, has its outer periphery supported by a support frame B and is configured to be vertically compressed under atmospheric pressure as the drinking water in the container gradually drops from the container, as shown by the dash-dot line in Fig. 1.

A cooling device 6 is provided around the low-temperature tank 2 at its lower portion. A funnel-shaped outlet port 7 which is provided in the tank 2 at a level higher than the cooling device 6 is connected to the high-temperature tank 3 through a connecting pipe 8. Thus, water near the bottom of the tank 2, which is being cooled by the cooling device 6, is dispensed through the outlet pipe 5a, while relatively warm drinking water is fed to the high-temperature tank 3 through the outlet port 7. A heating device 9 is mounted in the high-temperature tank 3 for heating drinking water supplied through the connecting pipe 8. Heated drinking water in the tank 3 is dispensed through the outlet pipe 5b, which is connected to the ceiling of the tank 3, under the water pressure in the low-temperature tank 2.

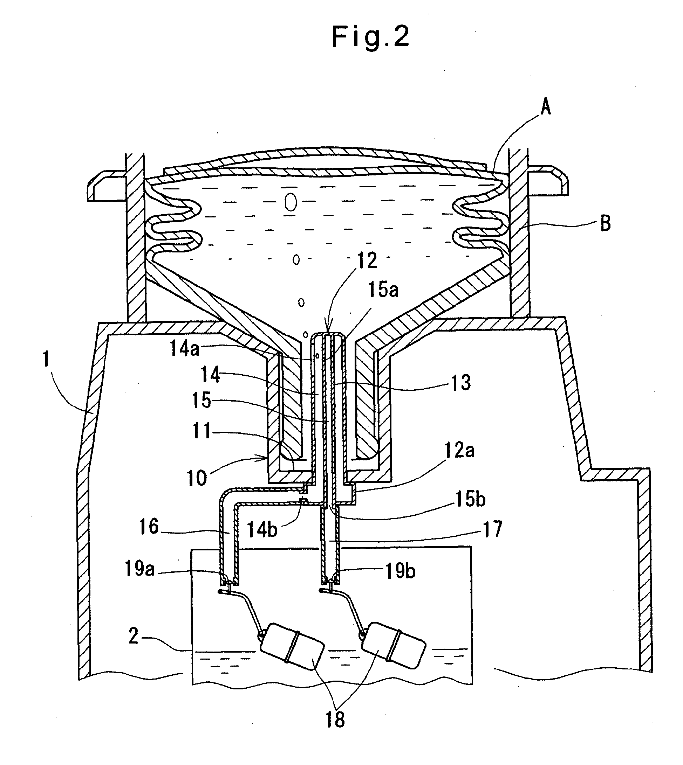

As shown in Figs. 1 and 2, the container connecting portion 10 has a recess 11 in which the outlet port of the raw water container A can be fitted. A water passage tube 12 extends through a central hole formed in the recess 11 and has a portion protruding upwardly from the central hole of the recess 11 and inserted upwardly into the outlet port of the raw water container A. Fig. 2 shows a state in which the side wall of the raw water container A is collapsed like a bellows with little water remaining in the raw water container A.

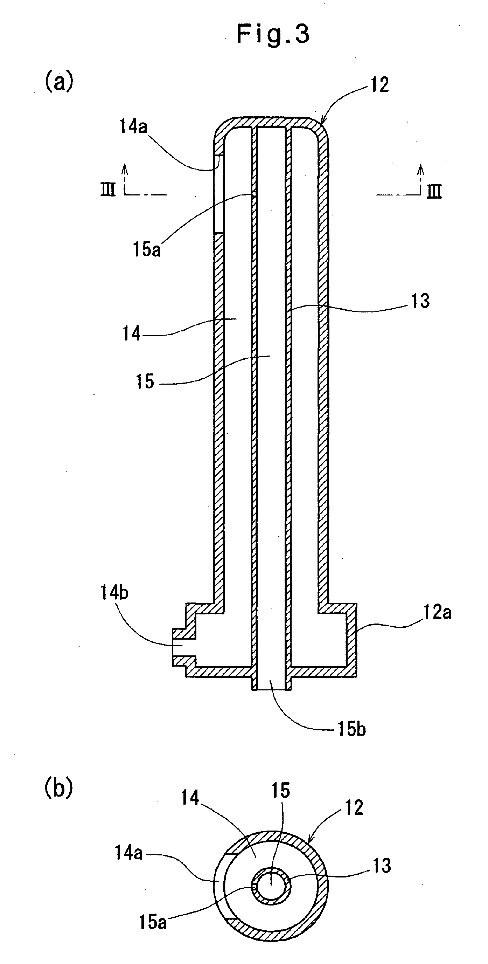

As shown in Figs. 3(a) and 3(b), the water passage tube 12 includes a tubular partitioning wall 13 dividing the interior of the water passage tube 12 into a radially outer water passage 14 communicating with a water passage hole 14a, and a radially inner air passage 15 communicating with the radially outer water passage 14 through a small air passage hole 15a. The water passage tube 12 has a large-diameter base portion 12a at its bottom end portion that engages the bottom surface of the recess 11. The partitioning wall 13 extends to the bottom of the bottom of the base portion 12a. The air passage hole 15a has a diameter of 1.5 mm or less and has an area not more than one-tenth of the cross-sectional area of the air passage 15. The water passage hole 14a has a diameter of 10 mm and has an area substantially equal to the cross-sectional area of the water passage 14.

As shown in Figs. 2, 3(a) and 3(b), an opening 14b is formed in the base portion 12a of the water passage tube 12 that communicates with the water passage 14. A water passage pipe 16 is connected to the opening 14b. The pipe 16 is bent so as to hang into the low-temperature tank 2. An opening 15b is formed in the center of the bottom of the base portion 12a which communicates with the air vent passage 15, which is defined by the partitioning wall 13. A straight air passage pipe 17 is connected to the opening 15b and vertically hangs into the low-temperature tank 2. The water passage pipe 16 and the air passage pipe 17 carry on-off valves 19a and 19b at their respective free ends that are configured to open as floats 18 in the tank 2 lowers with the fall of the water level in the tank 2.

With the raw water container A holding sufficient drinking water as shown in Fig. 1, when the water level in the low-temperature tank 2 lowers, the on-off valve 19a opens, allowing drinking water in the raw water container A to be supplied into the tank 2 through the water passage hole 14a, water passage 14 and water passage pipe 16. Thus, the water level in the tank 2 is kept constant. When the valve 19a opens, the on-off valve 19b also opens, so that a small amount of drinking water also drops through the air passage hole 15a, air passage 15 and air passage pipe 17.

As shown in Fig. 2, when drinking water in the raw water container A decreases and the side wall of the container A is collapsed until it cannot be collapsed any further, a negative pressure is generated in the raw water container A, so that drinking water stops dropping from the water passage pipe 16. In this state, since the water level in the low-temperature tank 2 remains low, the on-off valves 19a and 19b of the water passage pipe 16 and the air passage pipe 17 are both kept open. This allows air in the low-temperature tank 2 to be introduced into the raw water container A through the on-off valve 19b, air passage pipe 17, air passage 15, small air passage hole 15a, water passage 14 and water passage hole 14a, thus eliminating the negative pressure in the raw water container A. This in turn allows the drinking water remaining in the container A to be supplied into the tank 2 through the water passage pipe 16 and the air passage pipe 17 until the raw water container A is empty.

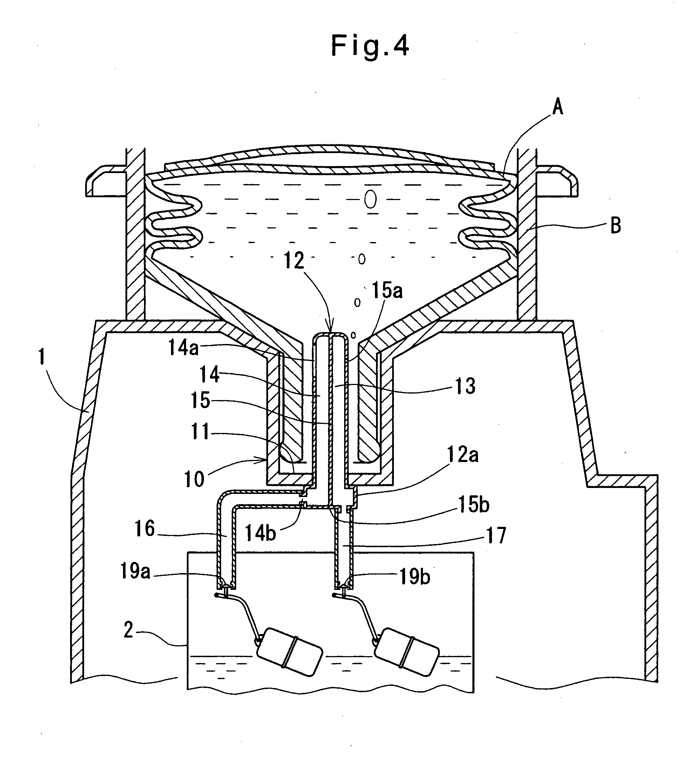

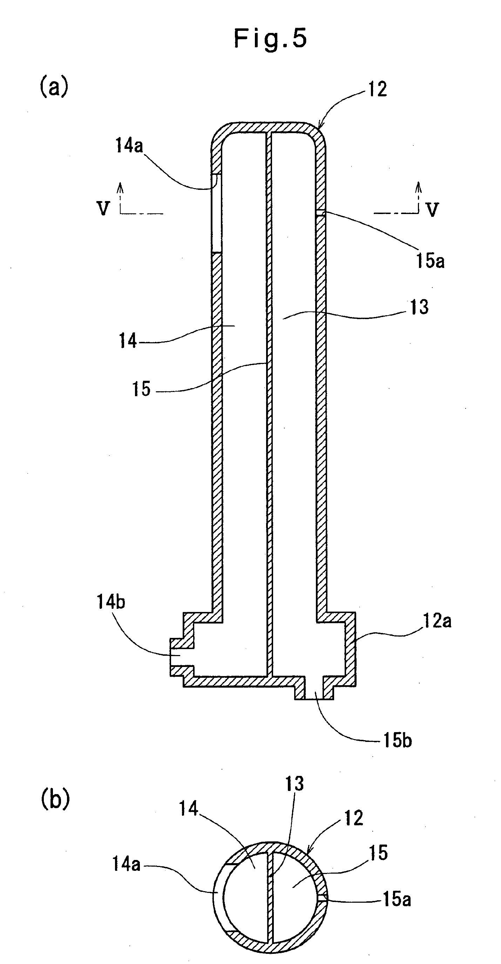

Figs. 4, 5(a) and 5(b) show a beverage dispenser of the second embodiment, which is basically of the same structure as the first embodiment, and differs therefrom in that the partitioning wall 13 is a flat plate dividing the interior of the water passage tube 12, which has a circular cross-section, into a water passage 14 and an air passage 15 both having a semicircular cross-section, that the air passage 15 communicates with the interior of the outlet port of the raw water container A thorough a small air passage hole 15a, and that the opening 15b of the air passage 15, to which the air passage pipe 17 is connected, is formed in the bottom of the base portion 12a at its portion offset to the side of the air passage 15. Otherwise, this embodiment is identical to the first embodiment. In particular, the partitioning wall 13 extends to the bottom of the base portion 12a, and the opening 14b of the water passage 14 is formed in the side of the base portion 12a and is connected to the water passage pipe 16. The small air passage hole 15a has a diameter of not more than 1.5 mm and has an area of not more than one-tenth of the cross-sectional area of the air passage 15.

In this embodiment too, as shown in Fig. 4, when drinking water in the raw water container A decreases and the side wall of the container A is collapsed until it cannot be collapsed any further, a negative pressure is generated in the raw water container A, so that drinking water stops dropping from the water passage pipe 16. In this state, since the water level in the low-temperature tank 2 remains low, the on-off valves 19a and 19b of the water passage pipe 16 and the air passage pipe 17 are both kept open. This allows air in the low-temperature tank 2 to be introduced into the raw water container A through the on-off valve 19b, air passage pipe 17, air passage 15, and small air passage hole 15a, thus eliminating the negative pressure in the raw water container A. This in turn allows the drinking water remaining in the container A to be supplied into the tank 2 through the water passage pipe 16 and the air passage pipe 17 until the raw water container A is empty.

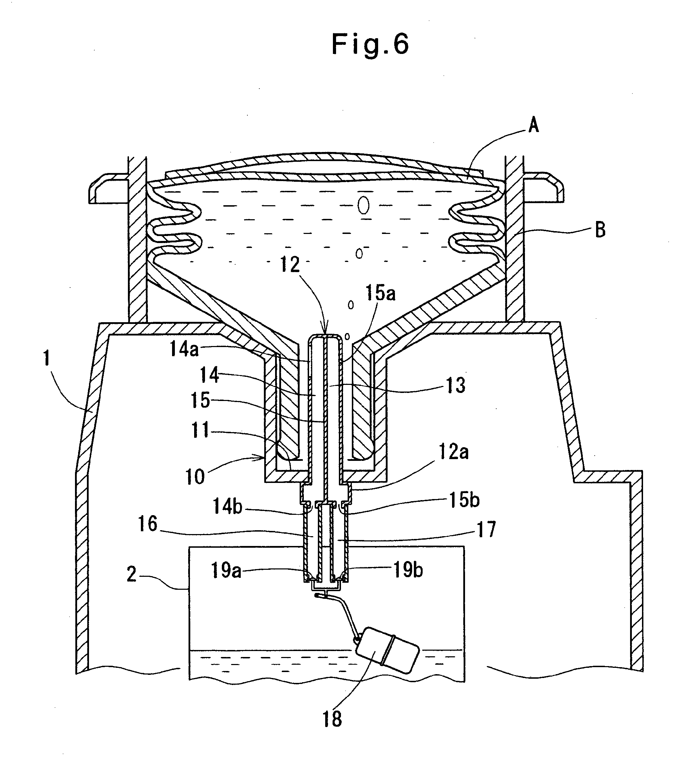

Fig. 6 shows a modification of the second embodiment, in which the opening 14b of the water passage 14 and the opening 15b of the air passage 15 are both formed in the bottom of the base portion 12a of the water passage tube 12 in juxtaposition with each other. The water passage pipe 16 and the air passage pipe 17 extend vertically from the respective openings 14b and 15b in a straight line into the tank 2. The on-off valves 19a and 19b provided at the respective free ends of the water passage pipe 16 and air passage pipe 17, which are located close to each other, are opened and closed by a single float 18.

The beverage dispenser of either of the above embodiments has the low-temperature tank and the high-temperature tank, and is used to dispense water as a beverage. But the beverage dispenser may not include one of the tanks, and the beverage to be dispensed is not limited to water.

### DESCRIPTION OF THE NUMERALS

A. Raw water container
B. Support frame
1. Casing
2. Low-temperature tank
3. High-temperature tank
4a, 4b. Outlet valve
5a, 5b Outlet pipe
6. Cooling device
7. Outlet port
8. Connecting pipe
9. Heating device
10. Container connecting portion
11. Recess
12. Water passage tube
12a. Base portion
13. Partitioning wall
14. Water passage
14a. Water passage hole
14b. Opening
15. Air passage
15a. Small air passage hole
15b. Opening
16. Water passage pipe
17. Air passage pipe
18. Float
19a, 19b. On-off valve

## Claims

1. A beverage dispenser comprising a raw water container (A) for holding drinking water therein, said container having an outlet port, said beverage dispenser further comprising a container connecting portion (10) to which the outlet port of the raw water container (A) can be connected with the outlet port facing downward, a tank (2) provided under the connecting portion for holding drinking water dropped from the raw water container (A), an outlet valve (4a) through which drinking water in the tank can be dispensed, a water passage tube (12) provided at the container connecting portion (10) and inserted upwardly into the outlet port of the raw water container (A), said water passage tube (12) being formed with a water passage hole (14a) through which drinking water in the raw water container (A) passes and said water passage tube (12) having a first opening (14b) at a bottom end portion thereof, a water passage pipe (16) which is connected to the first opening (14b) and through which drinking water drops into the tank (2), and a first on-off valve (19a) provided at a free end of the water passage pipe (47) and configured to open when the water level in the tank (2) lowers, wherein the raw water container (A) has a side wall which is sufficiently flexible such that as drinking water in the container (A) drops, the container (A) is gradually collapsed under atmospheric pressure, **characterized in that** the interior of the water passage tube (12) has a cross-section which is partitioned into a water passage (14) through which the water passage hole (14a) communicates with the first opening (14b), and an air passage (15) communicating with a small air passage hole (15a) which opens to the water passage (14) or the interior of the outlet port and having a second opening (15b) at a lower end portion of the air passage (15), and that the beverage dispenser further comprises an air passage pipe (17) connected to the second opening (15b) and hanging into the tank (2), and a second on-off valve (19b) provided at a free end of the air passage pipe (17) and configured to open when the water level in the tank (2) lowers.

2. The beverage dispenser of claim 1 wherein the small air passage hole (15a) has an area which is one-fifth or less of the cross-sectional area of the air passage (15).

3. The beverage dispenser of claim 1 wherein the small air passage hole (15a) has a diameter of 3 mm or less.

4. The beverage dispenser of any of claims 1 to 3 to wherein the air passage pipe (17) is a straight pipe extending vertically from the second opening (15b) into the tank.

5. The beverage dispenser of any of claims 1 to 4 further comprising a float (18) floating on the water in the tank (2) and connected to the first and second on-off valves (19a,19b) for opening and closing the first and second on-off valves (19a,19b).

## Patentansprüche

1. Getränkespender, umfassend einen Rohwasserbehälter (A), um darin Trinkwasser zu enthalten, wobei der Behälter eine Austrittsöffnung aufweist und der Getränkespender des Weiteren einen Behälteranschlussteil (10) umfasst, mit dem die Austrittsöffnung des Rohwasserbehälters (A) so verbunden werden kann, dass die Austrittsöffnung nach unten zeigt, einen Tank (2), der unter dem Anschlussteil angeordnet ist, um Trinkwasser aufzunehmen, das aus dem Rohwasserbehälter (A) tropft, ein Austrittsventil (4a), durch welches das Trinkwasser in dem Tank abgegeben werden kann, eine Wasserdurchgangsleitung (12), die an dem Behälteranschlussteil (10) angeordnet und aufwärts in die Austrittsöffnung des Rohwasserbehälters (A) eingesetzt ist, wobei die Wasserdurchgangsleitung (12) mit einer Wasserdurchgangsöffnung (14a) ausgebildet ist, durch die das Trinkwasser in dem Rohwasserbehälter (A) hindurchläuft und die Wasserdurchgangsleitung (12) eine erste Öffnung (14b) an einem unteren Endteil aufweist, ein Wasserdurchgangsrohr (16), das mit der ersten Öffnung (14b) verbunden ist und durch das Trinkwassertropfen in den Tank (2) gelangen, und ein erstes Auf/Zu-Ventil (19a), das an einem freien Ende des Wasserdurchgangsrohrs (16) angeordnet und dazu eingerichtet ist, sich zu öffnen, wenn der Wasserstand in dem Tank (2) sinkt, wobei der Rohwasserbehälter (A) eine Seitenwand aufinreist, die ausreichend flexibel ist, dass der Behälter (A) unter dem Atmosphärendruck allmählich zusammenfällt, während das Trinkwasser aus dem Behälter (A) heraustropft, **dadurch gekennzeichnet, dass** die Wasserdurchgangsleitung (12) im Inneren einen Querschnitt aufweist, der in einen Wasserkanal (14), durch den die Wasserdurchgangsöffnung (14a) mit der ersten Öffnung (14b) in Verbindung steht, und einen Luftkanal (15) unterteilt ist, der mit einer kleinen Luftdurchgangsöffnung (15a) in Verbindung steht, die sich in den Wasserkanal (14) oder das Innere der Austrittsöffnung öffnet und der eine zweite Öffnung (15b) an einem unteren Endteil des Luftkanals (15) aufweist, und dadurch, dass der Getränkespender des Weiteren ein Luftdurchgangsrohr (17) umfasst, das mit der zweiten Öffnung (15b) verbunden ist und in den Tank (2) hängt, und ein zweites Auf/Zu-Ventil (19b), das an einem freien Ende des Luftdurchgangsrohrs (17) angeordnet und dazu eingerichtet ist, sich zu öffnen, wenn der Wasserstand in dem Tank (2) sinkt.

2. Getränkespender nach Anspruch 1, wobei die kleine Luftdurchgangsöffnung (15a) eine Fläche aufweist, die ein Fünftel oder weniger der Querschnittsfläche des Luftkanals (15) beträgt.

3. Getränkespender nach Anspruch 1, wobei die kleine Luftdurchgangsöffnung (15a) einen Durchmesser von 3 mm oder weniger aufweist.

4. Getränkespender nach einem der Ansprüche 1 bis 3, wobei das Luftdurchgangsrohr (17) ein gerades Rohr ist, das sich vertikal von der zweiten Öffnung (15b) in den Tank erstreckt.

5. Getränkespender nach einem der Ansprüche 1 bis 4, des Weiteren umfassend einen Schwimmkörper (18), der auf dem Wasser in dem Tank (2) schwimmt und mit dem ersten und zweiten Auf/Zu-Ventil (19a, 19b) verbunden ist, um das erste und zweite Auf/Zu-Ventil zu öffnen und zu schließen.

## Revendications

1. Distributeur de boisson comprenant un conteneur d'eau brute (A) pour contenir de l'eau potable, ledit conteneur comportant un port de sortie, ledit distributeur de boisson comprenant en outre une partie de connexion de conteneur (10) à laquelle le port de sortie du conteneur d'eau brute (A) peut être connecté, le port de sortie étant orienté vers le bas, un réservoir (2) agencé sous la partie de connexion pour contenir l'eau potable écoulée du conteneur d'eau brute (A), une vanne de sortie (4a) à travers laquelle de l'eau potable du réservoir peut être distribuée, un tube de passage d'eau (12) agencé dans la partie de connexion de conteneur (10) et inséré vers le haut dans le port de sortie du conteneur d'eau brute (A), ledit tube de passage d'eau (12) étant formé avec un trou de passage d'eau (14a) à travers lequel passe l'eau potable du conteneur d'eau brute (A) et ledit tube de passage d'eau (12) comportant une première ouverture (14b) dans une partie d'extrémité inférieure correspondante, un tuyau de passage d'eau (16) qui est connecté à la première ouverture (14b) et à travers lequel l'eau potable s'écoule dans le réservoir (2), et une première vanne tout ou rien (19a) agencée à une extrémité libre du tuyau de passage d'eau (16) et configurée pour s'ouvrir quand le niveau d'eau dans le réservoir (2) diminue, dans lequel le conteneur d'eau brute (A) comporte une paroi latérale suffisamment flexible pour que, lorsque le niveau d'eau potable dans le conteneur (A) diminue, le conteneur (A) s'écrase graduellement sous la pression atmosphérique, **caractérisé en ce que** l'intérieur du tube de passage d'eau (12) présente une section transversale qui est cloisonnée en un passage d'eau (14) via lequel le trou de passage d'eau (14a) communique avec la première ouverture (14b) et un passage d'air (15) communiquant avec un petit trou de passage d'air (15a) qui s'ouvre sur le passage d'eau (14) ou l'intérieur du port de sortie et comportant une deuxième ouverture (15b) à une partie d'extrémité inférieure du passage d'air (15), et **en ce que** le distributeur de boisson comprend en outre un tuyau de passage d'air (17) connecté à la deuxième ouverture (15b) et suspendu dans le réservoir (2), et une deuxième vanne tout ou rien (19b) pourvue à une extrémité libre du tuyau de passage d'air (17) et configurée pour s'ouvrir quand le niveau d'eau dans le réservoir (2) diminue.

2. Distributeur de boisson selon la revendication 1, dans lequel le petit trou de passage d'air (15a) présente une surface inférieure ou égale à un cinquième de la surface de la section transversale du passage d'air (15).

3. Distributeur de boisson selon la revendication 1, dans lequel le petit trou de passage d'air (15a) présente un diamètre inférieur ou égal à 3 mm.

4. Distributeur de boisson selon l'une quelconque des revendications 1 à 3, dans lequel le tuyau de passage d'air (17) est un tuyau droit qui s'étend verticalement depuis la deuxième ouverture (15b) dans le réservoir.

5. Distributeur de boisson selon l'une quelconque des revendications 1 à 4, comprenant en outre un flotteur (18) qui flotte sur l'eau dans le réservoir (2) et qui est connecté aux première et deuxième vannes tout ou rien (19a, 19b) pour ouvrir ou fermer les première et deuxième vannes tout ou rien (19a, 19b).
